Europäisches Patentamt

European Patent Office

Office européen des brevets

(11) Veröffentlichungsnummer: **0 445 501 A1**

## (12) EUROPÄISCHE PATENTANMELDUNG

(21) Anmeldenummer: 91100098.2

(22) Anmeldetag: 02.01.91

(51) Int. Cl.⁵: **H02M 3/335**, H02M 7/10

(30) Priorität: 01.03.90 DE 4006441

(43) Veröffentlichungstag der Anmeldung:
11.09.91 Patentblatt 91/37

(84) Benannte Vertragsstaaten:
AT BE CH DE DK ES FR GB GR IT LI LU NL SE

(71) Anmelder: **Eltex-Elektrostatik Gesellschaft mbH**
**Postfach 1229 Neudorfer Strasse 5**
**W-7858 Weil am Rhein(DE)**

(72) Erfinder: **Domschat, Klaus**
**Unterdorf Strasse 3**
**W-7850 Lörrach 7(DE)**

(74) Vertreter: **Säger, Manfred, Dipl.-Ing. et al**
**Säger & Partner Postfach 81 08 09**
**W-8000 München 81(DE)**

(54) Variabler Hochspannungsgenerator.

(57) Die Erfindung betrifft einen steuerbaren Hochspannungs-Gleichstromgenerator mit einem Wechselstrom-Netzanschluß, einem Transformator, einer gegebenenfalls dazwischen angeordneten Gleichrichterschaltung im Primärkreis des Transformators und mit einer Kaskadenschaltung zur Vervielfachung der Gleichspannung im Sekundärkreis des Transformators mit einem Anschluß für einen Verbraucher, die dadurch gekennzeichnet ist, daß eine Schaltanordnung zum Unterbrechen des Stromkreises der Primärwicklung des Transformators vorgesehen ist, daß die Schaltanordnung als Leistungs-MOS-FET ausgebildet ist und daß dessen Öffnungszeit von einer Steuerschaltung gesteuert ist.

Die Erfindung bezieht sich auf einen steuerbaren Hoohspannungsgenerator gemäß dem Oberbegriff des Hauptanspruches.

Bei einem bekannten steuerbaren Hochspannungs-Gleichstromgenerator wird unter Verwendung bipolarer Transistoren mit einer Sperrspannung von etwa 100 V zunächst die Netzspannung von beispielsweise 220 V auf etwa 50 V über einen ersten Transformator heruntertransformiert. Die so erzeugte niedrige Spannung kann gleichgerichtet an die Primärentwicklung eines zweiten Transformators angelegt werden. Die sekundärseitige Spannung des zweiten Transformators wird in einer an sich bekannten Kaskaden- bzw. Spannungsvervielfacherschaltung weiter hochgespannt, so daß an deren Anschluß für einen Verbraucher eine variable Hochspannung im Bereich von etwa 0 bis 30 kV verfügbar ist. Dadurch, daß bei dem bekannten Hochspannungs-Gleichstromgenerator zunächst die Netzspannung auf etwa 50 V heruntertransformiert werden muß, ergibt sich die Notwendigkeit, einen zweiten Transformator vorzusehen. Hierdurch ist eine große und schwere Bauform bedingt. Außerdem liegt infolgedessen der Wirkungsgrad des bekannten Hochspannungs-Gleichstromgenerators bei etwa 30 % liegt. Aufgrund des Gewichts von etwa 26 kg und der Größe des bekannten Hochspannungs-Gleichstromgenerators ist weiterhin dessen Einsatz erschwert.

Der Erfindung liegt die Aufgabe zugrunde, einen gattungsgemäßen Hochspannungs-Gleichstromgenerator gemäß dem Oberbegriff des Hauptanspruches so weiterzubilden, daß er bei kleiner Bauform und relativ geringem Gewicht einen guten Wirkungsgrad aufweist sowie vielseitig einsetzbar ist.

Diese Aufgabe wird erfindungsgemäß bei einem gattungsgemäßen Hochspannungsgenerator durch die kennzeichnenden Merkmale des Hauptanspruches gelöst.

Durch die erfindungsgemäße Verwendung eines MOS-FET als Schaltanordnung entfällt das sonst erforderliche Heruntertransformatieren der Netzspannung. Es kann somit die Gleichrichterschaltung unmittelbar an den Netzanschluß angeschlossen werden.

Dadurch, daß das MOS-FET über Impulse variabler Impulsdauer eines in einer Steuerschaltung angeordneten Impulsgebers steuerbar ist, ergibt sich eine gute Durchsteuerbarkeit der Spannung, die in einem Bereich von 0 bis etwa 30 kV steuerbar ist. Zu Steuern ist dabei lediglich eine der Eingänge eines mit dem MOS-FET verbundenen Verstärkers über eine einstellbare Referenzspannungsquelle einzustellen.

Der Wirkungsgrad des erfindungsgemäßen variablen Hochspannungs-Gleichstromgenerators liegt bei etwa 80 %. Das Gesamtgewicht kann auf etwa 9,5 kg vermindert werden. Insgesamt ist der variable Hochspannungs-Gleichstromgenerator somit bei gutem Wirkungsgrad und damit geringer, beispielsweise als Wärme anfallender Verlustleistung universell einsetzbar.

Bei einer bevorzugten Ausführungsform sind MOS-FET und Steuerschaltung als Modul für einen universellen Einsatz als integrierter Schaltkreis ausgebildet.

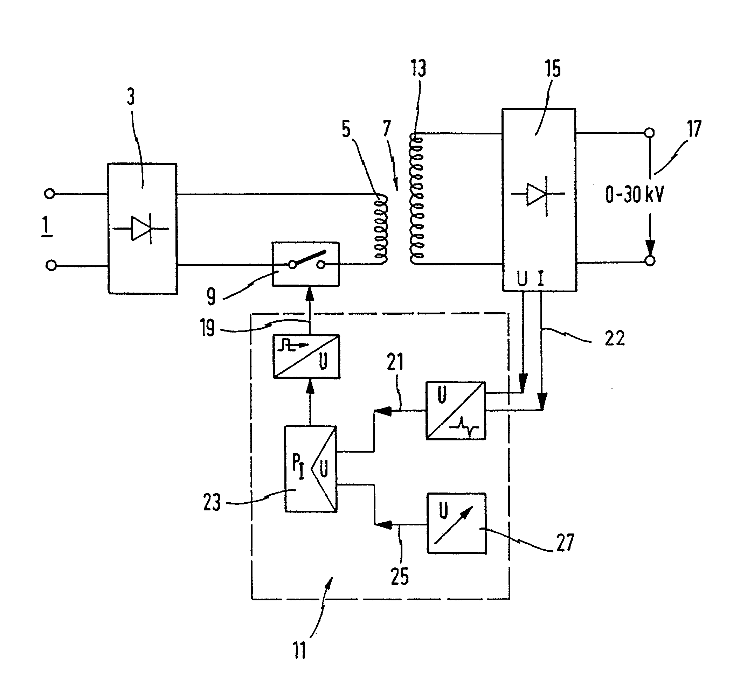

Ein Ausführungsbeispiel eines erfindungsgemäßen Universal-Hochspannungsgleichstromgenerators ist nachfolgend anhand der Zeichnung erläutert. Dabei zeigt die einzige Figur in schematischer Darstellung einen Schaltplan.

Der variable Hochspannungs-Gleichstromgenerator weist einen Wechselstrom-Netzanschluß 1 auf, der über eine Gleichrichterschaltung 3 mit der Primärwicklung 5 eines Transformators 7 verbunden ist. Der Transformator 7 ist dabei als normaler Netztransformator ausgebildet. Zwischen Gleichrichterschaltung 3 und Primärwicklung 5 ist ein MOS-FET 9 als elektrisch gesteuerte Schaltanordnung ausgebildet. Die Öffnungs- bzw. Schließzeiten der Schaltanordnung 9 sind über eine ingesamt mit 11 bezeichnete Steuerschaltung steuerbar. Die Sekundärwicklung 13 des Transformators 7 ist über eine nur andeutungsweise dargestellte Kaskaden- bzw. Spannungsvervielfacherschaltung mit Gleichrichterschaltungen und Kondensatoren mit einem Anschluß 17 für einen Verbraucher verbunden.

Zur Steuerung des MOS-FETs 9 und damit einer der Primärwicklung 5 zugeführten Wechselstromes variabler Impulsbreite bzw. Impulsdauer ist die Schaltanordnung 9 an den Ausgang 19 der Steuerschaltung 11 angeschlossen, dessen Eingang 22 mit der Kaskade 15 derart verbunden ist, daß in einem vollen Regelkreis der Steuerschaltung 11 eine an dem Verbraucheranschluß 17 anliegende Spannung $U_{ist}$ bzw. ein dort anliegender Strom $I_{ist}$ zuführbar ist. Der Eingang 21 ist innerhalb der Steuerschaltung 11 mit einem Operationsverstärker 23 verbunden, dessen zweiter Eingang 25 mit einer einstellbaren Referenzspannungsquelle 27, die innerhalb der Steuerschaltung 11 angeordnet ist, in Verbindung steht. Über die Referenzspannungsquelle 27 kann eine Einstellung hinsichtlich der Schließ- bzw. Öffnungszeiten der Schaltanordnung 9 so vorgenommen werden, daß die an dem Verbraucheranschluß 17 anliegende Spannung von etwa 0 bis etwa 30 kV stufenlos steuerbar ist, wobei jeweils entsprechende Amplitudenwerte für die Spannung und den Strom von etwa 0 bis 100 % durchgesteuert werden können. Für ein derartiges Steuern des an den Verbraucheranschluß 17 anliegenden Stromes bzw. der dort anliegenden Spannung werden, abhängig von der Referenzspannungsquelle 27 in dem Operationsverstärker 23 erzeugte Impulse variabler Dauer als Steuerimpulse dem MOS-FET 9 zugeführt. Die Öffnungs- bzw. Schließzeiten des MOS-FETs 9, die somit abhängig von dem von der Steuerschaltung 11 erhaltenen variablen Impulsen sind, beeinflussen die der Primärwicklung zugeführte Wechselspannung die in dem Transformator 7 zu transformierende Spannung. Mit dem MOS-FET 9 ist eine kontinuierliche Steuerung der in dem Transformator 7 zu transformierenden Wechselspannung und somit auch der an dem Verbraucheranschluß 17 erhältlichen Spannung bzw. des dort erhältlichen Stromes möglich, ohne daß hierfür eine nennenswerte Verlustleistung anfällt. Der Wirkungsgrad liegt deshalb bei etwa 80 %, während das Gewicht des erfindungsgemäßen variablen Hochspannungs-Gleichstromgenerators etwa 9,5 kg beträgt.

Für eine vielseitige Anwendung hat sich eine Modulbauweise, beispielsweise im Eurokarten-Format als vorteilhaft erwiesen. Dabei ist die Steuerschaltung 11 vielseitig als Universaltreiber für Hochspannungserzeuger einsetzbar.

**Patentansprüche**

1. Steuerbarer Hochspannungs-Gleichstromgenerator mit einem Wechselstrom-Netzanschluß (1), einem Transformator (7), einer gegebenenfalls dazwischen angeordneten Gleichrichterschaltung (3) im Primärkreis (5) des Transformators (7) und mit einer Kaskadenschaltung (15) zur Vervielfachung der Gleichspannung im Sekundärkreis (13) des Transformators (7) mit einem Anschluß (17) für einen Verbraucher, dadurch gekennzeichnet, daß eine Schaltanordnung (9) zum Unterbrechen des Stromkreises der Primärwicklung (5) des Transformators (7) vorgesehen ist, daß die Schaltanordnung als Leistungs-MOS-FET (9) ausgebildet ist und daß dessen Öffnungszeit von einer Steuerschaltung (11) gesteuert ist.

2. Generator nach Anspruch 1, dadurch gekennzeichnet, daß der MOS-FET (9) und/oder Steuerschaltung (11) als Modul für einen universellen Einsatz als integrierter Schaltkreis ausgebildet sind.

3. Generator nach Anspruch 1 oder 2, dadurch gekennzeichnet, daß der MOS-FET (9) über Impulse steuerbarer Impulsdauer eines Verstärkers (23) einer Steuerschaltung steuerbar ist, wobei ein Eingang (25) des Verstärkers an eine einstellbare Referenzspannungsquelle (27) und der andere Eingang (21) an zumindest einem Steuerausgang (22) der Kaskadenschaltung (15) anliegt, so daß dem Verstärker (23) über den Eingang (21) eine an dem Anschluß für einen Verbraucher (17) anliegende Spannung ($U_{ist}$) oder ein dort anliegender Strom ($I_{ist}$) zuführbar ist.

4. Generator nach Anspruch 3, dadurch gekennzeichnet, daß die Kaskadenschaltung (15) zwei Steuerausgänge (22) für die anliegende Spannung ($U_{ist}$) und den anliegenden Strom ($F_{St}$) aufweist.

# EUROPÄISCHER
# RECHERCHENBERICHT

Nummer der Anmeldung

## EP 91 10 0098

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 888 673 (DROEGE)<br>* das ganze Dokument * | 1-4 | H 02 M 3/335<br>H 02 M 7/10 |
| Y | US-A-4 720 775 (CATHELL)<br>* Spalte 1, Zeilen 19 - 21; Figur 1 * | 1-4 | |
| A | US-A-4 386 394 (KOCHER & STEIGERWALD)<br>* Zusammenfassung; Figur 1 * | 1-4 | |

| RECHERCHIERTE SACHGEBIETE (Int. Cl.5) |
|---|
| H 02 M |

Der vorliegende Recherchenbericht wurde für alle Patentansprüche erstellt

| Recherchenort | Abschlußdatum der Recherche | Prüfer |
|---|---|---|
| Den Haag | 05 Juni 91 | VAN DEN DOEL J.C. |